# FASCICULE DE BREVET EUROPEEN

(11) **EP 1 742 748 B1**
(45) Date de publication et mention de la délivrance du brevet: **04.06.2014**
(21) Numéro de dépôt: 05764521.0
(22) Date de dépôt: 03.05.2005
(51) Int. Cl.: B05D 5/08, B05D 7/16

(54) **PROCEDE DE FABRICATION DUN REVETEMENT ANTI-ADHESIF ET COMPOSITION D"UN PRIMAIRE DACCROCHAGE**
VERFAHREN ZUR HERSTELLUNG EINER ANTIHAFTBESCHICHTUNG UND ZUSAMMENSETZUNG EINER ERSTEN SCHICHT
METHOD FOR PRODUCING AN ANTIADHESIVE COATING AND COMPOSITION OF A PRIMER LAYER

(30) Priorité: 04.05.2004 FR 0404779
(43) Date de publication de la demande: 17.01.2007
(73) Titulaire: SEB SA, 69130 Ecully (FR)
(72) Inventeur: BUFFARD, Jean-Pierre, F-73100 Aix-les-Bains (FR); GARDAZ, Claudine, F-74150 Rumilly (FR); VINCLAIR, Marie, F-74540 Alby-sur-Chéran (FR)
(74) Mandataire: Lemoine, Jean-Sébastien
(86) Numéro de dépôt international: PCT/FR2005/001110
(87) Numéro de publication internationale: WO 2005/120723

(56) Documents cités:
- EP-A- 0 188 958
- EP-A- 0 786 290
- WO-A-2004/024348
- FR-A- 2 689 037
- FR-A- 2 784 459
- US-A- 5 922 468
- US-A1- 2002 002 229
- US-A1- 2003 044 619
- US-B1- 6 403 213

## Description

La présente invention concerne un procédé de fabrication d'un revêtement anti-adhésif sur un support en aluminium ou en alliage d'aluminium. Après cuisson d'un tel revêtement, le support revêtu peut notamment être embouti sous la forme d'un récipient culinaire.

Les revêtements anti-adhésifs couramment utilisés pour revêtir des articles culinaires sont réalisés à base de résine fluorocarbonée, telle que du polytétrafluoroéthylène (PTFE).

Un procédé largement utilisé pour fabriquer de tels revêtements consiste à pulvériser une dispersion aqueuse de résine fluorocarbonée sur le support métallique, qui a été soumis au préalable à une attaque chimique, visant à créer des microcavités d'ancrage du revêtement.

Toutefois, ce procédé par pulvérisation présente l'inconvénient majeur d'engendrer une perte importante de résine fluorocarbonée.

Un autre procédé connu de l'état de la technique consiste à appliquer la composition de revêtement anti-adhésif au moyen d'un rouleau, après un traitement préalable de la surface. Ce traitement préalable peut être réalisé par attaque chimique, pour créer des microcavités, ou par un traitement mécanique, pour créer une rugosité de surface.

Cependant, s'il permet effectivement de limiter la perte de résine fluorocarbonée, ce procédé par application au rouleau ne permet pas toujours d'obtenir un revêtement parfaitement lisse, le passage du rouleau pouvant en effet créer des ondulations.

De ce fait, un tel revêtement peut s'avérer relativement sensible aux fissures.

En outre, la présence d'ondulations ne permet pas d'appliquer sur le revêtement, de manière satisfaisante, un décor tel que celui décrit dans le document EP 0 188 958 ou dans le document WO 00/22395, qu'une telle application soit faite par sérigraphie ou par tampographie.

Une mauvaise qualité de l'état de surface d'un revêtement est particulièrement pénalisante dans le cas d'un décor comprenant un composé thermochromique tel que décrit dans le document WO 00/22395. En raison d'un état de surface irrégulier, la quantité de composition thermochromique destinée à former le décor n'est pas également répartie en tout point de la surface du revêtement, ce qui diminue fortement la perception du changement de couleur du décor final.

Enfin, il est également connu de l'homme du métier un procédé de formation, sur un article culinaire en aluminium, d'un revêtement antiadhésif comprenant l'application directement sur l'aluminium d'une solution de résine de polyamide-imide (PAI) dans un solvant organique pour former une sous-couche, puis l'application de polytétrafluoroéthylène (PTFE) additionnée de polyamide-imide (PAI) et de copolymère de tétrafluoroéthylène et de propylvinyléther (PFA) pour former la couche de primaire d'accrochage, et enfin l'application d'une dispersion aqueuse de PTFE pour former la couche supérieure de PTFE.

La composition de la couche primaire d'accrochage consistant en une solution de PAI dans un solvant organique, présente toutefois l'inconvénient majeur de présenter une viscosité inadaptée pour une application par sérigraphie.

Pour remédier aux inconvénients relevés ci-dessus et notamment obtenir un revêtement lisse sans perte importante de matière, la Demanderesse a mis au point un procédé d'application par sérigraphie d'un revêtement anti-adhésif.

Ce procédé par sérigraphie, décrit dans le document EP 0 562 968 A1, consiste à appliquer le revêtement à base de résigne fluorocarbonée de manière continue directement sur le support métallique. Cette application est réalisée au moyen d'une racle qui pousse la composition de revêtement à travers un écran sérigraphique. Le support a été au préalable soumis à une attaque chimique destinée à former des microcavités dans lesquelles pénètrent les particules de résine fluorocarbonée.

Ce procédé permet de réaliser, sans perte de résine fluorocarbonée, un revêtement anti-adhésif lisse, dont l'épaisseur est uniforme et facilement maîtrisée.

Par ailleurs, sur un tel revêtement, on peut appliquer de manière tout à fait satisfaisante un décor tel que celui décrit dans le document EP 0 188 958 ou dans le document WO 00/22395.

En outre, ce revêtement adhère particulièrement bien au support métallique.

Cette excellente adhérence est obtenue grâce à l'attaque chimique préalable du support permettant la formation de microcavités ainsi qu'aux conditions d'application de la résine fluorocarbonée. L'emploi d'une racle pour l'application par sérigraphie exerce en effet une pression optimisant la pénétration des particules de résine fluorocarbonée dans lesdites microcavités.

Toutefois, cette attaque chimique nécessite la mise en oeuvre d'acide chlorhydrique, ce qui, d'une part, constitue une étape délicate dans un procédé industriel et, d'autre part, est particulièrement contraignant pour l'environnement.

Le document EP 0 562 968 A1 envisage également la mise en oeuvre du procédé d'application par sérigraphie d'un revêtement à base de résine fluorocarbonée sur un support en aluminium qui a été préalablement sablé.

Contrairement à l'attaque chimique, le traitement mécanique préalable du support crée une rugosité de surface, et non pas de réels sites d'ancrage comme l'attaque chimique. Il est donc impossible d'obtenir une liaison satisfaisante en termes d'adhérence entre un support métallique traité mécaniquement et une couche à base de résine fluorocarbonée du revêtement qui serait directement appliquée sur ce support.

Il est par conséquent nécessaire, après un tel traitement mécanique du support et préalablement à l'application d'une ou de plusieurs couches de finition à base de résine fluorocarbonée, d'appliquer au moins une couche de primaire d'accrochage.

Or, la Demanderesse a constaté que les compositions de couches de primaire d'accrochage connues de l'état de la technique, qui sont spécifiquement adaptées à une application par pulvérisation, présentent une viscosité totalement inadaptée pour une application spécifique par sérigraphie.

De ce fait, la mise en oeuvre industrielle de telles couches de primaire d'accrochage pour une application par sérigraphie est impossible.

Le but de la présente invention est donc de remédier à l'ensemble des inconvénients mentionnés ci-dessus, en proposant un procédé de fabrication d'un revêtement anti-adhésif à base de résine fluorocarbonée sur un support en aluminium qui permette d'obtenir un revêtement lisse, d'épaisseur uniforme et contrôlable, adhérant parfaitement au support en aluminium, ce procédé étant d'industrialisation aisée, sans consommation inutile de matière et sans risque de pollution pour l'environnement.

La présente invention a ainsi pour objet un procédé de fabrication d'un revêtement anti-adhésif à base de résine fluorocarbonée sur un support en aluminium ou en alliage d'aluminium comprenant les étapes suivantes :
- on forme, par un traitement mécanique, des rugosités sur au moins une des faces du support,
- on applique, sur ce support traité mécaniquement, au moins une couche de primaire d'accrochage à base de résine fluorocarbonée, puis, après séchage, au moins une couche de finition également à base de résine fluorocarbonée,
- on procède à la cuisson simultanée de toute couche de primaire d'accrochage et de toute couche de finition ainsi déposées pour obtenir le frittage des particules de résine fluorocarbonée.

Selon le procédé de l'invention, on applique chaque couche de primaire d'accrochage par sérigraphie, chaque couche de primaire d'accrochage comprenant, avant ladite étape de cuisson, de 11 à 55 % en poids de résine fluorocarbonée, de 0,1 à 6 % en poids de résine polyamide imide (PAI), de 2 à 25 % en poids d'un agent épaississant, de 0,5 à 5 % en poids d'un agent antimousse, de 5 à 50 % en poids d'un solvant ayant une tension de vapeur inférieure à celle de l'eau et de l'eau, les pourcentages pondéraux indiqués étant des pourcentages de matière sèche, ou liquide dans le cas du solvant, mesurés sur la composition totale de chaque couche de primaire d'accrochage.

Une composition de couche de primaire d'accrochage conforme à l'invention présente une rhéologie adaptée à une application par sérigraphie de la couche de primaire d'accrochage tout en offrant une excellente adhérence, non seulement de la couche de primaire d'accrochage avec le support traité mécaniquement, mais également de la couche de primaire d'accrochage avec la couche de finition à base de résine fluorocarbonée.

Cette excellente adhérence de la couche de primaire d'accrochage, et donc du revêtement anti-adhésif final, avec le support traité mécaniquement est obtenue quelle que soit la rugosité présentée par chaque face du support en aluminium, ou en alliage d'aluminium, ayant été soumise au traitement mécanique préalable, sous réserve que cette rugosité ait un Rₐ minimal de 2 µm ± 0,5 µm, par rapport à un support en aluminium ou en alliage d'aluminium lisse qui présente un Rₐ de 0,6 µm à 1 µm.

Toutes les valeurs Rₐ de rugosité mentionnées dans la présente description sont données par rapport à une mesure effectuée à l'aide d'un appareil Perthometer®.

Il est important de noter qu'en fonction du type de traitement mécanique mis en oeuvre dans la première étape du procédé selon l'invention, la rugosité sera plus ou moins importante.

Selon un mode préféré de l'invention, ce traitement mécanique d'au moins une des faces du support en aluminium est réalisé par brossage ou par gravure, permettant chacun d'atteindre une rugosité présentant un Rₐ de 2 µm ± 0,5 µm.

On peut également envisager un traitement mécanique par émerisage qui permet d'obtenir un Rₐ de 3 µm ± 0,5 µm.

Cette excellente adhérence du revêtement anti-adhésif final sur le support métallique en aluminium ou en alliage d'aluminium reste observable, même après emboutissage du support revêtu, malgré les déformations du dit support, notamment au niveau de sa surface dotée de rugosités, sous l'effet des forces d'étirement.

On pourrait par ailleurs tout à fait procéder à un traitement par sablage d'au moins l'une des faces du support en aluminium, le traitement mécanique par sablage permettant d'atteindre un Rₐ de 5 µm ± 0,5 µm.

Toutefois, par rapport à un traitement mécanique par sablage, le traitement mécanique par émerisage, par brossage ou par gravure présente un certain nombre d'avantages économiques et environnementaux.

En particulier, on diminue considérablement les coûts des matières premières, les coûts de production ainsi que les coûts de maintenance des appareillages de production. En outre, tout type d'alliage d'aluminium peut être employé, sans aucune restriction. Du point de vue environnemental, les conditions de travail sont améliorées, les rejets étant notamment diminués et le niveau sonore amoindri.

Par ailleurs, un traitement par sablage confère une rugosité plus importante que celle obtenue par un traitement par émerisage, par brossage ou par gravure.

Aussi, une composition de couche de primaire qui présente une bonne adhérence avec une surface présentant une faible rugosité sera compatible avec une surface dotée d'une rugosité plus importante, tandis que l'inverse n'est pas vrai.

La présente invention concerne également un procédé de fabrication d'un article culinaire.

Selon l'invention, ce procédé est tel que, après la mise en oeuvre des différentes étapes du procédé qui vient d'être décrit pour la fabrication d'un revêtement anti-adhésif à base de résine fluorocarbonée sur un support, on procède à une étape d'emboutissage du support métallique ainsi revêtu pour obtenir la forme désirée de l'article culinaire.

D'autres avantages et particularités de l'invention résulteront de la description qui va suivre. Cette description indique notamment des exemples de compositions de couches de primaire d'accrochage, de revêtements anti-adhésifs et d'articles culinaires conformes à l'invention.

La première étape du procédé de fabrication d'un revêtement anti-adhésif à base de résine fluorocarbonée sur un support métallique conforme à l'invention consiste à former des rugosités sur au moins une des faces d'un support en aluminium, par un traitement mécanique.

Le support métallique est de manière courante un disque en aluminium ou en alliage d'aluminium.

Dans une version avantageuse de l'invention, ce traitement mécanique peut être réalisé par émerisage, par brossage ou par gravure.

L'émerisage est un traitement particulier de polissage permettant d'atteindre une rugosité donnée. L'émerisage de l'aluminium est couramment pratiqué au moyen d'une toile abrasive, par exemple du type toile émeri, ou au moyen d'un tampon abrasif.

La gravure peut par exemple être effectuée au moyen d'un cylindre.

Après élimination des résidus d'aluminium produits lors du traitement mécanique, on applique par sérigraphie, sur ce support, au moins une couche de primaire d'accrochage à base de résine fluorocarbonée.

La couche de primaire d'accrochage est de manière courante préparée à partir des résines sous forme de dispersion aqueuse.

Une couche de primaire d'accrochage conforme à l'invention peut ainsi comprendre les proportions pondérales des composés suivants :
- dispersion aqueuse de PTFE (à 60 % d'extrait sec) de 10 à 50 %
- dispersion aqueuse de PFA (à 50 % d'extrait sec) de 10 à 50 %
- dispersion aqueuse de PAI (à 10 % d'extrait sec) de 1 à 60 %
- agent épaississant de 0,16 à 2 %
- agent antimousse de 0,5 à 5 %
- solvant ayant une tension de vapeur inférieure à celle de l'eau de 5 à 50 %
- eau le reste.

L'agent épaississant peut également être remplacé par, ou mélangé avec, un agent gélifiant. L'un ou l'autre de ces composés est destiné à augmenter la viscosité de la composition de la couche de primaire d'accrochage, afin de permettre son application par sérigraphie. De préférence, on cherchera à obtenir une viscosité, mesurée à 20°C, comprise entre 5.000 et 50.000 mPa.s (cP).

L'agent épaississant et/ou gélifiant peut notamment être une résine acrylique polyélectrolytique, un guaranate, un polysaccharide, une méthylcellulose.

L'agent antimousse permet d'éviter la formation de bulles d'air dans le film formé après application de la couche de primaire d'accrochage, pour obtenir une couche lisse et homogène.

On peut en particulier choisir cet agent antimousse parmi les huiles minérales ou les silicones.

Le solvant, qui présente une tension de vapeur inférieure à celle de l'eau, peut être un diol, et notamment un diol aliphatique. Il permet d'éviter un séchage trop rapide de la couche de primaire d'accrochage, sur et entre les mailles de l'écran sérigraphique.

On peut bien évidemment ajouter à la composition de couche de primaire d'accrochage qui vient d'être décrite, un certain nombre d'autres composés, tels que des charges et/ou pigments, par exemple du noir de fumée.

Selon une variante avantageuse de réalisation de la composition selon l'invention, la couche de primaire d'accrochage peut comprendre un agent d'adhérence, dans une proportion pondérale comprise entre 1,5 à 6 % de matière sèche mesurée sur la composition totale, en particulier de la silice.

De manière courante, on utilise de la silice en suspension ou silice colloïdale. Par exemple, on pourra utiliser une proportion pondérale comprise entre 5 et 20 % de silice colloïdale à 30 % d'extrait sec dans l'eau.

De manière particulièrement avantageuse, la composition de la couche de primaire d'accrochage comprend également une base, telle que de l'hydroxyde d'ammonium NH₄OH, de manière à conférer à cette composition un pH supérieur à 9, afin de catalyser la formation d'un gel.

Une proportion pondérale de base comprise entre 0,5 et 2 % est particulièrement avantageuse.

Après séchage de la couche de primaire d'accrochage, on procède à l'application d'au moins une couche de finition à base de résine fluorocarbonée.

Les résines fluorocarbonées convenant pour la composition des couches de primaire d'accrochage ainsi que pour la composition des couches de finition sont notamment décrites dans le document US 5,536,583.

On citera plus préférentiellement le polytétrafluoroéthylène (PTFE), un copolymère de tétrafluoroéthylène et de perfluoropropylvinyléther (PFA) ou encore un copolymère de tétrafluoroéthylène et d'hexafluoropropylène (FEP), chacun de ces composés pouvant être utilisé seul ou en mélange avec l'un et/ou l'autre des composés.

Dans une version avantageuse de l'invention, la résine fluorocarbonée entrant dans la composition d'au moins une couche de primaire d'accrochage comprend du PTFE et du PFA.

Plus particulièrement, chaque couche de primaire d'accrochage comprend, en pourcentage de matière sèche mesuré sur la composition totale de chaque couche de primaire d'accrochage, de 6 à 30 % en poids de polytétrafluoroéthylène (PTFE) et de 5 à 25 % en poids de résine perfluoroalkylvinyléther (PFA).

L'application de chaque couche de finition peut être effectuée par tout moyen conventionnel connu et notamment par pulvérisation, par rouleau ou par rideau.

Toutefois, pour les raisons déjà exposées ci-avant, notamment d'économie de matière, d'absence de défaut de surface et d'écologie, on met de préférence en oeuvre une application par sérigraphie pour le dépôt de chaque couche de finition.

Dans une telle hypothèse, un décor du type de ceux décrits dans les documents EP 0 188 958 et WO 00/22395 peut avantageusement être déposé par sérigraphie ou par tampographie.

Après l'application de la dernière couche de finition, on procède à la cuisson simultanée de la couche de primaire d'accrochage et de chaque couche de finition ainsi déposées pour obtenir le frittage des particules de résine fluorocarbonée, en l'espèce du PTFE et du PFA, de la couche de primaire d'accrochage et des particules de résine fluorocarbonée de chaque couche de finition.

Lorsque du PTFE est employé comme résine fluorocarbonée dans les compositions des différentes couches formant le revêtement, le frittage est notamment réalisé par passage du support revêtu de la couche de primaire d'accrochage et des couches de finition dans un four à 400°C, pendant 5 minutes par exemple.

Après cette étape de cuisson, le support revêtu est alors embouti pour lui conférer la forme souhaitée puis, le cas échéant, est soumis aux étapes de finition telles que rognage, soudure et/ou fixation des accessoires nécessaires à la réalisation d'un article culinaire fini.

On vient de décrire la réalisation d'un support revêtu par une couche de primaire d'accrochage et par une ou plusieurs couches de finition.

Il y a lieu de noter que l'on peut bien évidemment procéder à l'application de deux, voire de trois ou plus, couches de primaire d'accrochage.

Par ailleurs, on peut également tout à fait envisager de procéder à un traitement mécanique préalable des deux faces d'un disque en aluminium ou en alliage d'aluminium afin de revêtir chacune des dites faces d'un revêtement anti-adhésif.

La composition de chacune des couches de primaire d'accrochage et de chacune des couches de finition formant le revêtement anti-adhésif ainsi que le nombre des dites couches peut être strictement identique pour chacune des deux faces du disque.

On peut également faire varier le nombre de couches de primaire d'accrochage et de couches de finition formant les revêtements anti-adhésifs ainsi que leur composition respective, pour des besoins particuliers, notamment esthétiques.

Il est en effet de pratique courante dans le domaine des articles culinaires dotés de revêtements anti-adhésifs de présenter un revêtement anti-adhésif intérieur de couleur foncée, tandis que le revêtement extérieur est de couleur claire.

Pour répondre à une telle condition, la Demanderesse a constaté que la substitution d'une certaine proportion de résine polyamide imide (PAI) par une quantité adaptée de polysulfure de phénylène (PPS) permettait d'obtenir, après application des couches de finition puis frittage, des revêtements plus clairs, dont la couleur peut être adaptée avec ajouts de pigments.

Ainsi, une couche de primaire d'accrochage comportant du polysulfure de phénylène (PPS) permet de conférer au revêtement final une couleur plus claire. De préférence, la proportion pondérale maximale de PPS, en pourcentage de matière sèche mesuré sur la composition totale de chaque couche de primaire d'accrochage, est de 10 %.

Des exemples de compositions de couches de primaire d'accrochage, avant cuisson des couches de primaire d'accrochage et de finition, permettant d'obtenir des revêtements anti-adhésifs, l'un d'aspect clair et l'autre d'aspect plus foncé, figurent ci-dessous.

Une composition de couche de primaire d'accrochage destinée à former, après application d'au moins une couche de finition à base de résine fluorocarbonée, un revêtement de couleur claire est la suivante :
- PTFE de 6 à 30 %
- PFA de 5 à 25 %
- PPS de 2 à 10 %
- PAI de 0,1 à 2 %
- diol de 5 à 50 %
- silice de 1,5 à 6 %
- résine épaississante de 0,16 à 2 %
- noir de carbone de 0,25 à 1,25 %
- agent antimousse de 0,5 à 5 %
- NH₄OH de 0,5 à 2 %
- eau le reste,
les pourcentages indiqués étant des pourcentages de matière sèche mesurés pour chaque composé sur la composition totale de chaque couche de primaire d'accrochage.

Une composition A particulière de couche de primaire d'accrochage permettant de réaliser un revêtement de couleur claire peut être la suivante :
- dispersion aqueuse de PTFE (à 60 % d'extrait sec) de 10 à 50 %
- dispersion aqueuse de PFA (à 50 % d'extrait sec) de 10 à 50 %
- dispersion à base de PPS (à 20 % d'extrait sec) de 10 à 50 %
- dispersion aqueuse de PAI (à 10 % d'extrait sec) de 1 à 20 %
- diol de 5 à 50 %
- silice colloïdale (à 30 % d'extrait sec) de 5 à 20 %
- résine épaississante (à 8 % d'extrait sec) de 2 à 25 %
- noir de fumée (à 25 % d'extrait sec) de 1 à 5 %
- agent antimousse de 0,5 à 5 %
- NH₄OH de 0,5 à 2 %
- eau le reste.

Le revêtement anti-adhésif comprenant au moins une couche de primaire d'accrochage ayant la composition précitée permettant la réalisation d'un revêtement de couleur claire, et ayant par exemple la composition A, peut avantageusement constituer le revêtement extérieur d'un article culinaire.

Une composition de couche de primaire d'accrochage destinée à former, après application d'au moins une couche de finition à base de résine fluorocarbonée, un revêtement de couleur foncé est la suivante :
- PTFE de 6 à 30 %
- PFA de 5 à 25 %
- PAI de 2 à 6 %
- diol de 5 à 50 %
- silice de 1,5 à 6 %
- résine épaississante de 0,16 à 2 %
- noir de carbone de 0,25 à 1,25 %
- agent antimousse de 0,5 à 5 %
- NH₄OH de 0,5 à 2 %
- eau le reste,
les pourcentages indiqués étant des pourcentages de matière sèche mesurés pour chaque composé sur la composition totale de chaque couche de primaire d'accrochage.

Une composition B particulière de couche de primaire d'accrochage permettant de réaliser un revêtement de couleur foncée peut être la suivante :
- dispersion aqueuse de PTFE (à 60 % d'extrait sec) de 10 à 50 %
- dispersion aqueuse de PFA (à 50 % d'extrait sec) de 10 à 50 %
- dispersion aqueuse de PAI (à 10 % d'extrait sec) de 20 à 60 %
- diol de 5 à 50 %
- silice colloïdale (à 30 % d'extrait sec) de 5 à 20 %
- résine épaississante (à 8 % d'extrait sec) de 2 à 25 %
- noir de fumée .(à 25 % d'extrait sec) de 1 à 5 %
- agent antimousse de 0,5 à 5 %
- NH₄OH de 0,5 à 2 %
- eau le reste.

Le revêtement comprenant au moins une couche de primaire d'accrochage ayant la composition précitée permettant la réalisation d'un revêtement de couleur foncée, et ayant par exemple la composition B, peut avantageusement constituer le revêtement intérieur d'un article culinaire.

Rien n'interdit d'envisager la réalisation d'un article culinaire par emboutissage d'un disque d'aluminium revêtu, sur une face d'un premier revêtement anti-adhésif comprenant une couche de primaire d'accrochage de couleur foncée, par exemple de composition B et sur l'autre face d'un second revêtement anti-adhésif comprenant une couche de primaire d'accrochage de couleur claire, par exemple de composition A.

## Revendications

1. Procédé de fabrication d'un revêtement anti-adhésif à base de résine fluorocarbonée sur un support en aluminium ou en alliage d'aluminium comprenant les étapes suivantes :
- on forme, par un traitement mécanique, des rugosités sur au moins une des faces du support,
- on applique, sur ce support traité mécaniquement, au moins une couche de primaire d'accrochage, puis au moins une couche de finition, toute couche de primaire d'accrochage et toute couche de finition étant à base de résine fluorocarbonée,
- on procède à la cuisson simultanée de toute couche de primaire d'accrochage et de toute couche de finition ainsi déposées pour obtenir le frittage des particules de résine fluorocarbonée,
**caractérisé en ce que** l'on applique chaque couche de primaire d'accrochage par sérigraphie, chaque couche de primaire d'accrochage comprenant, avant l'étape de cuisson et en pourcentage de matière sèche mesuré sur la composition totale de chaque couche de primaire d'accrochage :
. de 11 à 55 % en poids de résine fluorocarbonée,
. de 0,1 à 6 % en poids de résine polyamide imide (PAI),
. de 0,16 à 2 % en poids d'un agent épaississant,
. de 0,5 à 5 % en poids d'un agent antimousse,
. de 5 à 50 % en poids d'un solvant ayant une tension de vapeur inférieure à celle de l'eau, et
. de l'eau.

2. Procédé selon la revendication 1, **caractérisé en ce que** la résine fluorocarbonée comprend au moins un composé choisi parmi le polytétrafluoroéthylène (PTFE), le copolymère de tétrafluoroéthylène et de perfluoropropylvinyléther (PFA) et le copolymère de tétrafluoroéthylène et d'hexafluoropropylène (FEP).

3. Procédé selon la revendication 1 ou 2, **caractérisé en ce que** chaque couche de primaire d'accrochage comprend, en pourcentage de matière sèche mesuré sur la composition totale, de 6 à 30 % en poids de polytétrafluoroéthylène (PTFE) et de 5 à 25 % en poids de résine perfluoroalkylvinyléther (PFA).

4. Procédé selon l'une quelconque des revendications 1 à 3, **caractérisé en ce que** la couche de primaire d'accrochage comporte en outre du polysulfure de phénylène (PPS), de préférence dans une teneur maximale de 10 % en poids de matière sèche mesurée sur la composition totale.

5. Procédé selon l'une quelconque des revendications 1 à 4, **caractérisé en ce que** la couche de primaire d'accrochage comporte en outre une base, de préférence dans une proportion pondérale comprise entre 0,5 et 2 %.

6. Procédé selon l'uné quelconque des revendications 1 à 5, **caractérisé en ce que** la couche de primaire d'accrochage comporte en outre de la silice, de préférence dans une proportion pondérale comprise entre 1,5 et 6 % de matière sèche mesurée sur la composition totale.

7. Procédé selon l'uné quelconque des revendications 1 à 6, **caractérisé en ce que** la couche de primaire d'accrochage comporte en outre des pigments, par exemple du noir de fumée.

## Patentansprüche

1. Herstellung einer Antihaftbeschichtung auf der Basis von Fluorkohlenstoffharz auf einem Aluminium- oder Aluminiumlegierungsuntergrund mit den folgenden Schritten:
- mechanische Aufrauhung mindestens einer der beiden Untergrundflächen,
- Aufbringung mindestens eines Primer-Haftanstrichs auf dem mechanisch aufgerauten Untergrund, und danach mindestens eine Deckschicht, wobei alle Haft- und Deckschichten aus Fluorkohlenstoffharzbasis bestehen,
- gleichzeitiges Einbrennen aller aufgebrachten Haft- und Deckschichten zur Sinterung der Fluorkohlenstoff-Harzpartikel,
**dadurch gekennzeichnet, dass** alle Primer-Haftschichten im Siebdruckverfahren aufgebracht werden, wobei jede Primer-Haftschicht vor dem Einbrennen aus den folgenden Trockensubstanz-Gewichtsprozentsätzen der gesamten Primer-Haftschichtmischung besteht:
- 11 bis 55 % Gewichtsanteile Fluorkohlenstoffharz,
- 0,1 bis 6 % Gewichtsanteile Polyamid-Imid (PAI),
- 0,16 bis 2 % Gewichtsanteile eines Eindickmittels,
- 0,5 bis 5 % Gewichtsanteile eines Schaumhemmers,
- 5 bis 50 % Gewichtsanteile eines Lösungsmittels dessen Dampfdruck niedriger als der von Wasser ist, und
- Wasser.

2. Verfahren nach Anspruch 1, **dadurch gekennzeichnet, dass** das Fluorkohlenstoffharz mindestens eine Komponente Polytetrafluorethylen (PTFE), das Kopolymer von Tetrafluorethylen und Perfluorpropylvinyläther (PFA) und das Kopolymer von Tetrafluorethylen und von Hexafluorpropylen (FEP) enthält.

3. Verfahren nach Anspruch 1 oder 2, **dadurch gekennzeichnet, dass** jede Primer-Haftschicht 6 bis 30 % Gewichtsanteile Polytetrafluorethylen (PTFE) und 5 bis 25 % Gewichtsanteile Perfluorpropylvinyläther (PFA) der Gesamtmischungs-Trockensubstanz enthält.

4. Verfahren nach einem der Ansprüche 1 bis 3, **dadurch gekennzeichnet, dass** die Primer-Haftschicht außerdem Polyphenylensulfid (PPS) in Höhe von maximal 10 % Gewichtsanteilen der Gesamtmischungs-Trockensubstanz enthält.

5. Verfahren nach einem der Ansprüche 1 bis 4, **dadurch gekennzeichnet, dass** die Primer-Haftschicht außerdem eine Base, vorzugsweise mit einem Gewichtsanteil von 0,5 bis 2 %, enthält.

6. Verfahren nach einem der Ansprüche 1 bis 5, **dadurch gekennzeichnet, dass** die Primer-Haftschicht außerdem Silizium, vorzugsweise mit einem Trockensubstanz-Gewichtsanteil von 1,5 bis 6 % der Gesamtmischung enthält.

7. Verfahren nach einem der Ansprüche 1 bis 6, **dadurch gekennzeichnet, dass** die Primer-Haftschicht außerdem Pigmente enthält, beispielsweise Flamm- oder Lampenruß.

## Claims

1. A method of manufacturing a non-stick, fluorocarbon resin-based coating on a support made of aluminum or aluminum alloy comprising the following steps:
- forming, by a mechanical treatment, roughnesses on at least one of the sides of the support,
- applying, on this mechanically treated support, at least one coupling primer layer, and then at least one top coat, any coupling primer layer and any top coat being fluorocarbon resin-based,
- proceeding to the simultaneous curing of any coupling primer layer and any top coat thus deposited to obtain the sintering of the fluorocarbon resin particles,
**characterized in that** each coupling primer layer is applied by screen printing, each coupling primer layer comprising, prior to the curing step and as a percentage of dry matter measured over the total composition of each coupling primer layer:
· from 11 to 55% by weight of fluorocarbon resin,
· from 0.1 to 6% by weight of polyamide-imide resin (PAI),
· from 0.16 to 2% by weight of a thickening agent,
· from 0.5 to 5% by weight of an anti-foaming agent,
· from 5 to 50% by weight of a solvent having a vapor pressure lower than that of water, and
· water.

2. The method according to claim 1, **characterized in that** the fluorocarbon resin comprises at least one compound selected among the polytetrafluoroethylene (PTFE), the copolymer of tetrafluoroethylene and perfluoropropylvinylether (PFA) and the copolymer of tetrafluoroethylene and hexafluoropropylene (FEP).

3. The method according to claim 1 or 2, **characterized in that** each coupling primer layer comprises, as a percentage of dry matter measured over the total composition, from 6 to 30% by weight of polytetrafluoroethylene (PTFE) and from 5 to 25% by weight of perfluoroalkylvinylether resin (PFA).

4. The method according to any one of claims 1 to 3, **characterized in that** the coupling primer layer further comprises polyphenylene sulfide (PPS), preferably with a maximum content of 10% by weight of dry matter measured over the total composition.

5. The method according to any one of claims 1 to 4, **characterized in that** the coupling primer layer further comprises a base, preferably in a weight proportion ranging between 0.5 and 2%.

6. The method according to any one of claims 1 to 5, **characterized in that** the coupling primer layer further comprises silica, preferably in a weight proportion ranging between 1.5 and 6% of dry matter measured over the total composition.

7. The method according to any one of claims 1 to 6, **characterized in that** the coupling primer layer further comprises pigments, for example carbon black.
